# EUROPEAN PATENT APPLICATION

(11) **EP 2 428 438 A1**
(43) Date of publication of application: **14.03.2012**
(21) Application number: 11180275.7
(22) Date of filing: 06.09.2011
(51) Int. Cl.: B62J 33/00, B62K 21/26, B62K 23/04

(54) **Heated grip easy to mount on and to adapt to handlebars of different vehicles**

(30) Priority: 09.09.2010 IT MI20101633
(71) Applicant: Domino S.p.A., 23896 Sirtori (LC) (IT)
(72) Inventor: Frigerio, Giovanni, 22036 ERBA (CO) (IT); Confalonieri, Stefano, 23851 GALBIATE (LC) (IT); Camilli, Simone, 20843 VERANO BRIANZA (MB) (IT)
(74) Representative: Ripamonti, Enrico

(57) **Abstract**

A grip (1) to be mounted at the end of a handlebar of a motorcycle, snowmobile or the like, said grip (1) being in particular the vehicle throttle control grip mounted rotatable about the handlebar and being heated by a heating member (56) powered by an electrical conductor connected via an end thereof to said heating member (56), said end being positioned in proximity to the grip (1). This end is positioned within a casing (8) close to this latter but separated from it, the conductor being present in said casing (8) loosely without undergoing twisting about itself.

## Description

The present invention relates to a heated grip in accordance with the introduction to the main claim.

Heated grips, either fixed or, in particular, for throttle control in a motorcycle, snowmobile or the like, have been known for some time. The heating member, generally an electrical resistance element, embedded in or secured to the grip, is powered by an external conductor connected to a vehicle electrical source (battery). With this type of grip, and in particular those which rotate about the corresponding handlebar, at the end of which they are positioned to control the throttle or the engine r.p.m., there is the problem of ensuring that electrical power reaches the heating member for each angular position attained by the handlebar grip.

Various solutions are known for achieving this, the most simple of which uses an electrical conductor presenting a cable containing electric wires connected to the heating member at their ends. This cable can be positioned in the handlebar interior or be disposed externally along the handlebar, for example within a suitable groove provided along it. However, solutions of this type present various drawbacks relating both to the use of the grip rotating about the handlebar and to the manner in which these cables are associated with the handlebar. For example, rotating the grip can stress the end of the electric cable (or rather each of its component wires) connected to the heating member, such stressing possibly detaching the cable from the heating member, with obvious problems for the heating member operation.

Another drawback of many known solutions is the difficulty of inserting the cable into the handlebar, making it difficult to replace the cable when required.

It is also known, for example from EP1285849, to associate the heating member with a spiral shaped conductor wound about itself for a certain number of turns and positioned in proximity to the grip, about the handlebar on a circular part associated with the grip. From this part, free conductor ends project away from the grip for connection to a usual electrical supply cable, the conductor being coupled to the heating member within said circular part.

Although this solution solves many of the problems of previous heated grips, it presents certain drawbacks such as having a predetermined cable length for forming the spiral turns. The need for a (relatively) very lengthy cable is related to the fact of forming the spiral turns in the circular part associated with the grip, their number being predefined by the need to enable the spiral power supply cable to be sufficiently loose to enable the spiral geometry to contract radially to the necessary extent to compensate for the grip rotation on the handlebar.

The known arrangement is therefore relatively difficult to mount on the motorcycle handlebar, requiring considerable care by the operator concerned.

In addition, the need for a conductor shaped as several turns wound about each other makes the conductor considerably bulky.

In addition, as that part containing the turns is associated (and integral) both with the heated grip and with the annular flange portion on which the transmission cables are connected, and as grips of this type are made for a specific motorcycle or for the motorcycle company which uses them, it is not possible to standardize the production of a grip such as that of EP1285849, leading to an increased production cost for grips obtained in accordance with the teachings of that patent.

To this it must be added that if the spiral cable develops problems, the entire grip has to be replaced, with obvious drawbacks related to replacement costs.

JP H04 51886 relates to a heated grip comprising a heating element wrapped around a tubular body rotating about the handlebar (on which the grip is positioned) and covered by a gripping part forming a single piece with the tubular body and with the heating element. The tubular body is associated with a transmission cable controlling the vehicle throttle, while a member fixed onto said tubular body, and forming a single piece with it, maintains a connection between an electrical conductor and the heating element disposed between said body and the gripping part of the grip. The conductor is connected in known manner to an electricity supply (battery) on the vehicle and is inserted into a part or shell fixable onto the grip (which itself is a single piece defined by the gripping part, heating element and tubular body, all rotatable about the handlebar). The aforesaid transmission cable fixed to one end of the tubular body passes through this shell.

Hence the known Japanese solution presents the same drawbacks as the solution defined by EP 1285849, i.e. the impossibility of achieving standardized grips; this is because for specific motorcycles a specific grip with a specific gripping part (and associated heating element) must be available, obliging the motorcycle manufacturer to provide a complete grip for each vehicle type. Moreover, as the grip is integral with the heating element, if problems arise in the heating element the entire grip has to be replaced, with evident drawbacks related to replacement costs.

In addition, in this prior Japanese patent the conductor lies close to the combined grip and tubular body when this is at rest (not rotated) and becomes slack when this latter is rotated. This can result in blockage of the slack conductor with consequent blockage of said tubular body in the rotated position and the impossibility of reducing the motorcycle throttle, with evident drawbacks.

Lastly, in the Japanese patent the use of a single conductor (with inside two separate wires) has greater costs due to the need to obtain such a conductor for said particular use in a grip.

An object of the present invention is to provide a heated grip of the type rotatable on a handlebar to control the throttle or the r.p.m. of the vehicle engine, which represents an improvement over the state of the art.

A particular object of the invention is to provide a heated grip which is of simple construction and easy to mount on a handlebar of a motorcycle or similar vehicle.

Another object is to provide a grip of the aforesaid type which can be easily adapted to motorcycles or the like with a handlebar of different diameter, and can be easily and quickly repaired if problems arise in the power supply element of the heating member for the grip, this positively influencing repair costs.

A further object is to provide a heated grip in which the operator who mounts it on the handlebar does not need to worry about having an exact length of power supply cable.

These and other objects which will be apparent to the expert of the art are attained by a heated grip according to the accompanying claims.

The present invention will be better understood from the accompanying drawing, which is provided by way of non-limiting example and in which:
Figure 1 is a lateral view of a heated grip according to the invention for vehicle throttle control;
Figure 2 is a front view of the grip of Figure 1;

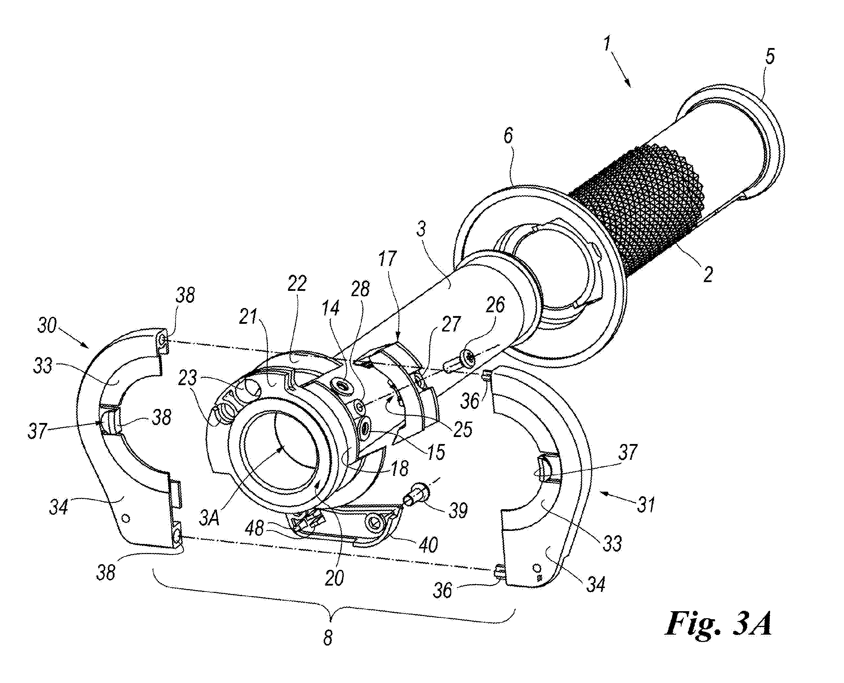

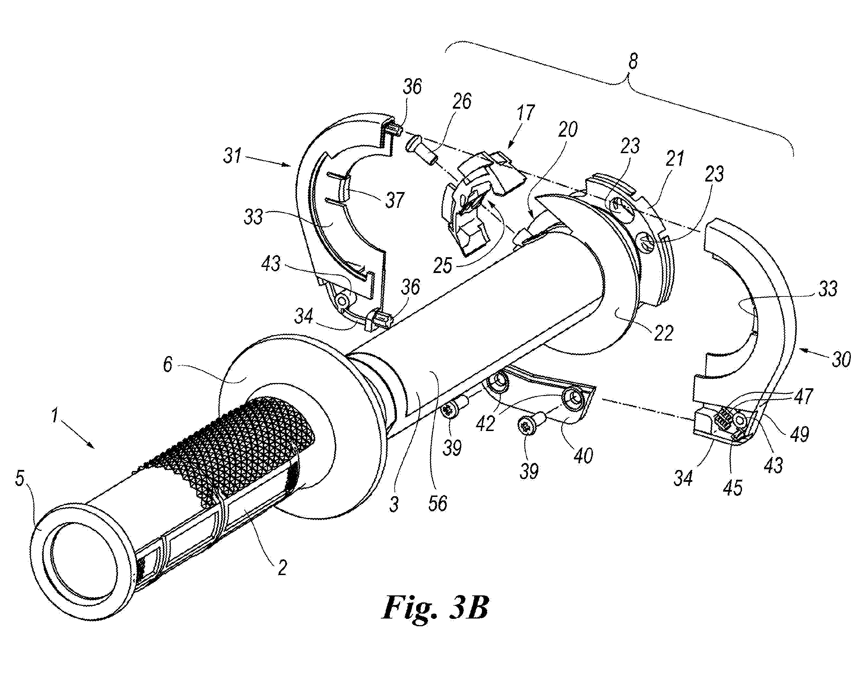

Figures 3A and 3B show, from two opposite sides, exploded perspective views of the grip of Figure 1 with some parts omitted for greater clarity;
Figure 4 shows the grip of Figure 2 assembled;

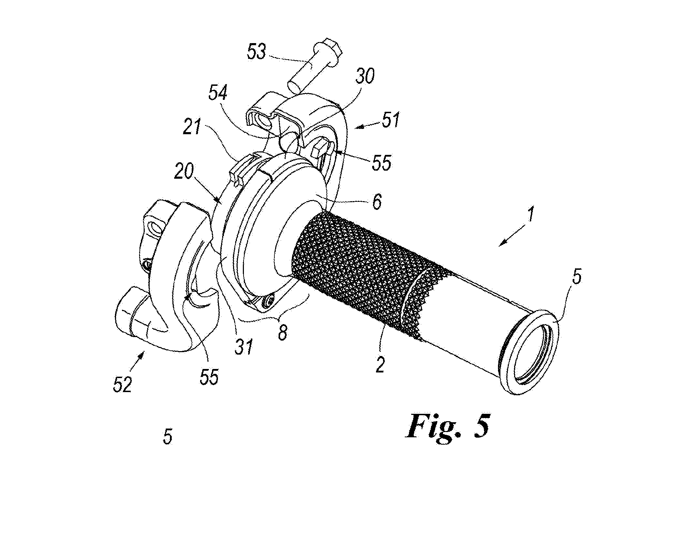

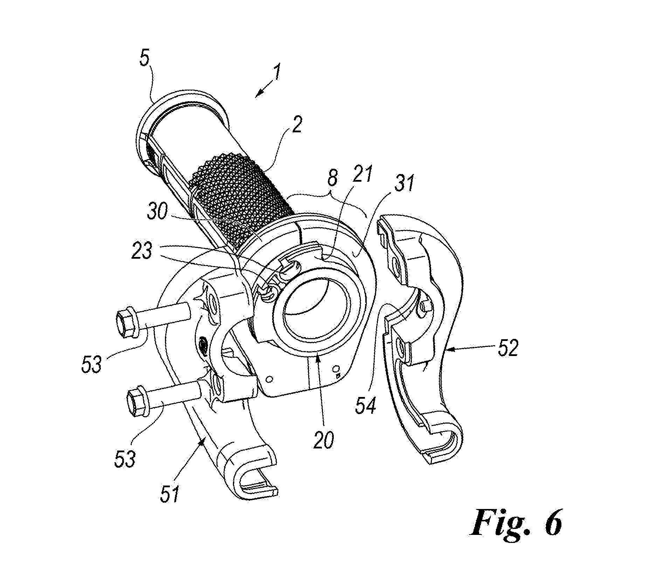

Figures 5 and 6 show respectively a front perspective view and a lateral perspective view, both exploded, of the grip of Figure 1;
Figures 7 and 8 show a section on the line 7-8 of Figure 8 and a lateral view respectively, with some parts omitted for greater clarity, of the grip of

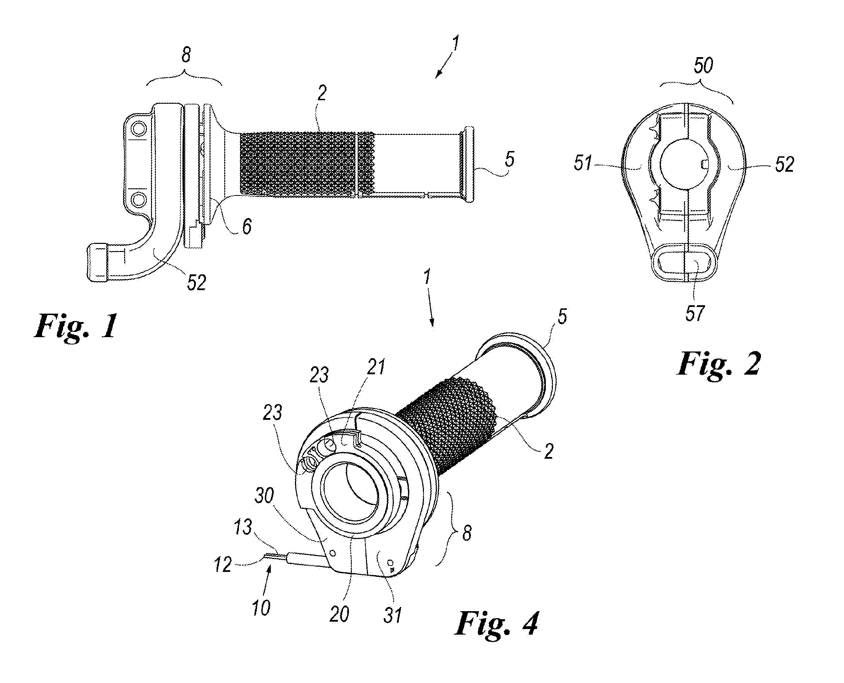

Figure 1 during a stage in which it is in its unrotated rest position on the handlebar; and

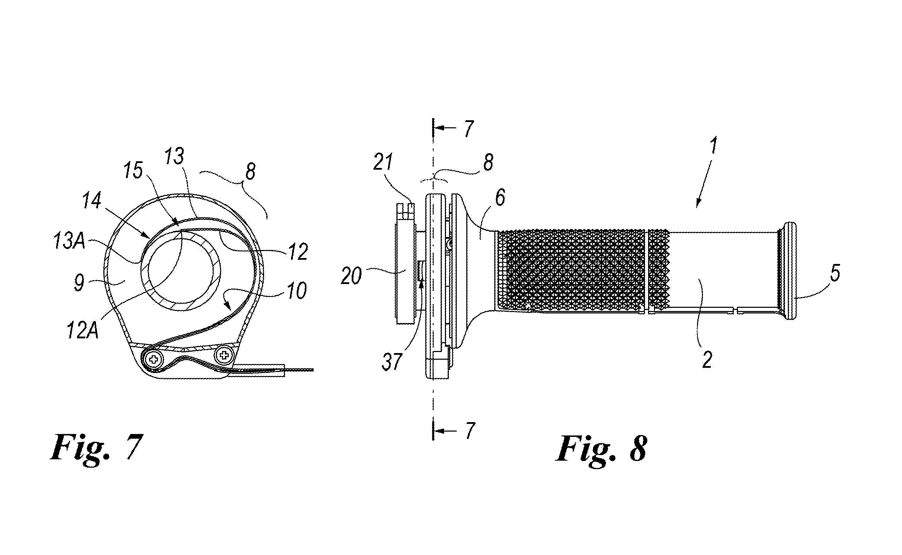

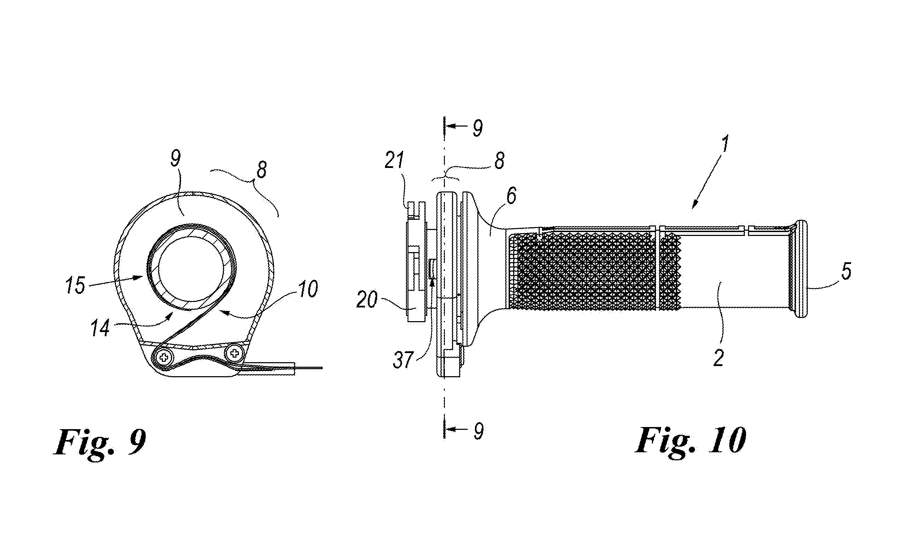

Figures 9 and 10 are views corresponding to those of Figures 7 and 8 respectively, but of the grip in its position of maximum angular rotation corresponding to the vehicle full throttle condition.

With reference to said figures, a heated grip is indicated overall by 1; the grip shown in the figures is a vehicle throttle control grip, i.e. the grip by which the driver controls the engine fuel feed and hence its r.p.m., and consequently the vehicle speed. However the invention is also applicable to that grip fixed on the vehicle handlebar in the opposite position to said throttle grip.

The grip 1 comprises a gripping portion 2 and is mounted on a tubular element or body 3 positioned at the end of a handlebar (not shown) and rotating, in known manner, about its longitudinal axis by the action of the driver on the portion 2 which moves it about said axis coinciding with that of the end part of the handlebar on which the grip is positioned. This portion 2 is torsionally rigid with the body 3 (by elastic deformation and/or by friction, being of natural or synthetic rubber or a like material) and is both separate and separable from this body.

The element 3 is connected, as described hereinafter, to transmission cables by which the rotation of said grip 1 (and of the associated element 3) is converted, in known manner, into a variation in the engine r.p.m. The element 3 comprises a usual known heating member 56 wrapped about it. This member is removably secured to the body or element 3 in known manner, but is separated from the portion 2, i.e. from the actual grip 1. The member 56 can hence be separated from the grip 1 should it need to be replaced for operating reasons.

The portion 2 presents a first end portion 5 to be disposed on the free end of the handlebar and a second end portion 6 facing the central plane through the motorcycle. At this second portion 6 there is a container box casing 8, internally hollow at 9, containing an electrical conductor 10 to be connected, at a first end, to the heating member 56 of the element 3 and also connected to a vehicle electricity supply (battery) (via its other end). The container box casing 8 is separate from the element 3 and is fixed onto the handlebar, but such as to enable that element to rotate about the handlebar.

More specifically, the conductor 10 comprises two electric cables 12 and 13 having a corresponding free end 12A and 13A inside the box casing 8 fixed to terminal conductors 14 and 15, themselves fixed to the heating resistance element 56 associated with the tubular element 3.

With the tubular body 3 at rest (i.e. when the motorcycle is not subjected to acceleration), the cables 12 and 13 are positioned loosely within the cavity 9 of the box casing 8 (see Figures 7-10). By rotating the grip 1 and hence the body 3, and depending on the rotated position of the grip relative to the handlebar, the cables can be unwound away from each other (Figure 7) or partially wound towards each other (Figure 9) about the surface of the tubular element 3, which acts as a winding drum. Even when the grip is in its completely rotated position ("full throttle", Figure 10), the terminal conductors 14 and 15 do not cross the electric cables 12 and 13.

At their free ends 12A and 13A the cables cooperate with a U-shaped cable lock 17 which becomes superposed on a lug 18 of corresponding shape rising from the tubular element 3 at an end 3A thereof provided with an annular portion 22 partially flanged at 21 and with a collar 22 on which the portion 6 of the grip rests. Usual transmission cables (not shown) are connected to this annular portion 20 or rather to holes 23 of the flange 21 of this latter, for vehicle throttle control by rotating the grip (or the element 3) about the axis of the handlebar on which the grip is mounted.

The cable lock 17 is arranged to press the cables 12 and 13 between itself and the lug 18 (by projections 25 on the element 17 which face the lug); the cable lock 17 is fixed on the tubular element 3 by screws 26 cooperating with a hole 27 in the cable lock 28 and in the element 3 respectively.

Two internally hollow shells 30, 31 are mounted on the element 3 over the lug 18 in a position corresponding with its end 3A and with the portion 20; these shells define the box casing 8 and its internal cavity 9. The shells are each shaped with a semicircular portion 33 and with an elongated end portion 34 to be able to fit about the element 3, enabling it to rotate, (or directly on the handlebar) and be fixed together, this being achieved by pins 36 of the first shell 30 cooperating with seats 38 of the second shell 31 and by screws 39 (or equivalent removable mechanical connection members such as elastic insertion plugs) which enclose with a cover 40 the elongated portion 34 of each shell. These screws cooperate with flared seats 42 of these portions. The cover closes onto a recess 45 in the portion 34 of the shell 30 in which cable passage and cable lock guides 47 are present cooperating with counter-guides 48 on the cover 40 to retain the conductor cables 12 and 13. This recess 45 opens at 49 laterally to the shell 30 such that, when the cover 40 is fixed onto the shells, an aperture is created for passage of the electrical conductor 10 to the outside of the casing 8. It should be noted that the cables 12 and 13 of this conductor pass about the cylindrical seat 43 of the second shell 31 before leaving the casing 8.

Compared with this latter it is therefore free to rotate relative to the element 3 on which the casing 8 is mounted.

The casing 8 is fixed onto the handlebar with the aid of a cover element 50 associated with the grip completed as aforedescribed. This cover element 50 covers the transmission cables and contains the described portion 20 to which it is coupled and which it covers. The element 50 comprises two shells 51 and 52, connectable together by screws 53, each shell with a recess 54 for receiving the portion 20 and in particular the flange 21. The cables associated with this latter leave the element 50 through its aperture 57.

It should also be noted that the element 50, when connected by screws 53, rigidly fixes to itself the element 8 via seats 55 provided in each of the shells 51, 52 and relative lugs 37 provided on the shell portions 33 of the element 8.

The invention provides a heated grip, in particular the throttle grip, which is easy to assemble and simple to mount on the handlebar. This is because the gripping portion 2 of this grip is of known type and is separable from the element 3, and the element 3 on which the portion 2 is mounted is simply coupled to the conductor 10 without this having to be wound a number of times about the element itself or about hollow end portions of the grip. The conductor 10 is defined by simple electric cables enclosed by the casing 8; this latter is then mounted onto the tubular element 3, while simply maintaining the cables in a loose position within the cavity 9 of this casing.

It should be noted that if necessary, the heating member 56 can be easily replaced without the need to separate the tubular body 3 and the throttle control transmission members associated with it from the handlebar. This replacement is done by separating the portion 2 from the element 3, separating the heating member 56 from this latter (after detaching the U-piece 17), and separating the conductors 14 and 15 from this member. The heating member can be easily replaced without detaching the casing 8 and element 50 from the handlebar, after which the grip can be reassembled.

A particular embodiment of the invention applied to a throttle grip has been described in which the conductor cables are present loosely and slackly within the casing 8 during at least part of the use of the vehicle, i.e. when the tubular element 3 is not being rotated for acceleration.. If the invention is to relate to a fixed grip, this could also be obtained as already described in this document. Evidently, such a grip would not have the portion 20 or the cover element 50, but would still have the (fixed) casing 8 containing the cables again associated loosely or slackly with the tubular element on which the gripping part 2 of the grip is mounted.

Other embodiments could be obtained in accordance with the preceding description. For example, in the case of a fixed heated grip, the cables inserted loosely into the containing casing 8 could be connected directly to a heating member associated with the grip 1, after assembling the casing 8 and mounting it on the handlebar directly. Such embodiments are also to be considered as falling within the scope of the ensuing claims.

## Claims

1. A grip (1) to be mounted at the end of a handlebar of a motorcycle, snowmobile or the like, said grip being a vehicle throttle control grip mounted rotatable about the handlebar or the fixed grip on the handlebar, the grip (1) being heated by a heating member (56) powered by an electrical conductor (10) connected via a connection end (12A, 13A) thereof to said member (56), said grip (1) comprising a gripping portion (2) mounted about a tubular element (3) on which said heating member (56) is disposed, this member (56) being covered by the gripping portion (2), said connection end being positioned in proximity to the grip (1) mounted on the tubular element (3), **characterised in that** said end is positioned within a casing (8) fixed onto the handlebar close to said grip (1) but separated from it, the conductor being present in said casing (8) loosely without undergoing twisting about itself during at least part of the use of the vehicle, said gripping portion (2) of the grip (1) being removably coupled to said tubular element (3), the heating member being associated with this latter, the grip (1) hence being separable from said member (56) and from said tubular element (3) to enable the member (56) to be replaced if necessary.

2. A grip as claimed in claim 1, **characterised in that** said casing (8) comprises two shells (30, 31) provided with an internal cavity and able to be coupled and fixed together, said shells being internally hollow to define an internal cavity (9) of said casing (8) and containing electric cables (12, 13) defining the conductor (10) for electrically powering the heating member (56) of the grip, said cables being positioned in said cavity (9) loosely and slackly.

3. A grip as claimed in claim 2, in particular a vehicle throttle control grip, provided with a tubular element (3) angularly movable about its longitudinal axis coinciding with that of the end of the handlebar on which the grip (1) is positioned, said tubular element (3) being connected to transmission cables by which the rotation of the grip (1) and of the associated element (3) is converted into a variation in the engine r.p.m., **characterised in that** said box casing (8) is mounted on said tubular element (3), but is fixed relative to this latter, rotation of the tubular element (3) causing the electric cables (12, 13) of the conductor (10) to approach the element (3) but without forming twists throughout the entire revolution, or forming opposing spiral turns, said cables returning to their slackened position following release of the grip (1) and return of the tubular element (3) into a non-rotated position.

4. A grip as claimed in claim 3, **characterised in that** said box casing (8) is positioned in proximity to an end (3A) of the tubular element (3) at which an annular portion (20) is present, with a flange (21) to which said transmission cables are connected.

5. A grip as claimed in claim 4, **characterised in that** said box casing (8) is interposed between said annular portion (20) and a projecting collar (22) present on the tubular element (3) at a distance from said portion (20), and on which there rests an end (6) of the gripping portion (2) of the grip (1).

6. A grip as claimed in claim 3, **characterised in that** the tubular element (3) carries conductor elements or terminals (14, 15) to which the electric cables (12, 13) are connected and with which the grip heating member cooperates.

7. A grip as claimed in claim 1, **characterised in that** the box casing (8) loosely containing the electrical conductor (10) is fixed directly on the handlebar or to another member (50) directly connected to it.

8. A grip as claimed in claim 2, **characterised in that** each of the two shells (30, 31) defining the box casing (8) comprises a semicircular portion (33) and an elongated portion (34), said shells (30, 31) comprising coupling means (36, 37) and coupling counter-means (38) which cooperate to fix the shells together, these latter being fixed together by removable mechanical connection members (39).

9. A grip as claimed in claim 8, **characterised in that** said elongated portions (34) present seats (43) for the removable mechanical connection members (39), these latter cooperating with a component (40) to be disposed over said portions (34) to enclose the electrical conductor (10) within it, at least one of said portions (34) presenting cable passage and cable lock guides (47) adapted to cooperate with counter-guides (48) associated with this component.

10. A grip as claimed in claim 7, **characterised in that** the box casing (8) is contained in a cover element (50) which covers the transmission cables, said element (50) presenting mutually engaged parts (51, 52) fixed together to receive said box casing (8), the transmission cables emerging from said cover element (50), said element (50) being fixed to the handlebar.

11. A grip as claimed in claim 1, **characterised in that** the conductor emerges laterally from the casing (8) in which it is contained.
